# FASCICULE DE BREVET EUROPEEN

(11) **EP 1 699 736 B1**
(45) Date de publication et mention de la délivrance du brevet: **30.07.2014**
(21) Numéro de dépôt: 04817596.2
(22) Date de dépôt: 24.12.2004
(51) Int. Cl.: C01B 31/02

(54) **PROCEDE DE DISSOLUTION DE NANOTUBES DE CARBONE ET SES APPLICATIONS**
VERFAHREN ZUM AUFLÖSEN VON KOHLENSTOFFNANORÖHREN UND VERWENDUNG DAVON
METHOD FOR DISSOLVING CARBON NANOTUBES AND THE USE THEREOF

(30) Priorité: 30.12.2003 FR 0315582
(43) Date de publication de la demande: 13.09.2006
(73) Titulaire: CENTRE NATIONAL DE LA RECHERCHE SCIENTIFIQUE (CNRS), 75794 Paris Cedex 16 (FR)
(72) Inventeur: PENICAUD, Alain, F-33000 BORDEAUX (FR); POULIN, Philippe, F-33400 TALENCE (FR); DERRE, Alain, F-33730 BALZAC (FR)
(74) Mandataire: Novagraaf Technologies
(86) Numéro de dépôt international: PCT/FR2004/003383
(87) Numéro de publication internationale: WO 2005/073127

(56) Documents cités:
- WO-A-02/088025
- US-B1- 6 187 823
- FENG WEI ET AL: "Fabrication of composite films by controlling molecular doping processes between polyaniline and soluble multiwalled nanotubes and their optical characteristics" JPN J APPL PHYS PART 1 REGUL PAP SHORT NOTE REV PAP; JAPANESE JOURNAL OF APPLIED PHYSICS, PART 1: REGULAR PAPERS AND SHORT NOTES AND REVIEW PAPERS SEPTEMBER 2003, vol. 42, no. 9 A, septembre 2003 (2003-09), pages 5726-5730, XP001185692
- AUSMAN K D ET AL: "Organic solvent dispersions of single-walled carbon nanotubes: toward solutions of pristine nanotubes" JOURNAL OF PHYSICAL CHEMISTRY. B, MATERIALS, SURFACES, INTERFACES AND BIOPHYSICAL, WASHINGTON, DC, US, vol. 104, no. 38, 28 septembre 2002 (2002-09-28), pages 8911-8915, XP002206260 ISSN: 1089-5647
- QIAO R ET AL: "Atypical dependence of electroosmotic transport on surface charge in a single-wall carbon nanotube" NANO LETTERS,AMERICAN CHEM. SOC, USA, vol. 3, no. 8, août 2003 (2003-08), pages 1013-1017, XP002292244 ISSN: 1530-6984
- ISLAM, M. F. ET AL: "High Weight Fraction Surfactant Solubilization of Single-Wall Carbon Nanotubes in Water" NANO LETTERS , CODEN: NALEFD; ISSN: 1530-6984, vol. 3, no. 2, février 2003 (2003-02), pages 269-273, XP002344624
- PETIT P ET AL: "Tuning and monitoring the electronic structure of carbon nanotubes" CHEMICAL PHYSICS LETTERS, ELSEVIER, NETHERLANDS, vol. 305, no. 5-6, 28 mai 1999 (1999-05-28), pages 370-374, XP002344623 ISSN: 0009-2614 cité dans la demande
- JOUGUELET E ET AL: "Controlling the electronic properties of single-wall carbon nanotubes by chemical doping" CHEMICAL PHYSICS LETTERS ELSEVIER NETHERLANDS, vol. 318, no. 6, 3 mars 2000 (2000-03-03), pages 561-564, XP002344832 ISSN: 0009-2614 cité dans la demande

## Description

L'invention a pour objet un procédé de dissolution de nanotubes de carbone et ses applications, notamment pour la fabrication de composites et la purification de nanotubes.

L'obtention de nanotubes sous forme de solutions présente un grand intérêt pour leurs applications industrielles, en particulier pour leur mise en forme en vue d'une utilisation donnée. De telles solutions sont en effet facilement utilisables pour former des films de nanotubes ou pour élaborer, par imprégnation, des composites renfermant des nanotubes. Elles ouvrent également la voie à la purification des nanotubes.

A l'heure actuelle, la dispersion de nanotubes de carbone est le plus généralement réalisée par addition de tensio-actifs ou de polymères dispersants, et exposition aux ultrasons, ou par fonctionnalisation.

Ces méthodes présentent toutefois l'inconvénient, respectivement, d'endommager ou de dénaturer les nanotubes.

Dans la première méthode, les tensio-actifs sont difficilement désorbables de la surface des nanotubes, ce qui empêche les contacts intertubes essentiels pour l'exploitation, en particulier, de leurs propriétés électroniques. Ces solutions doivent être en général soumises à des doses élevées d'ultrasons pour dissoudre les nanotubes, ce qui entraîne la coupure des nanotubes en morceaux plus courts, et donc moins anisotropes, diminuant par la même une caractéristique fondamentale et spécifique des nanotubes de carbone. Il en résulte une altération des propriétés des nanotubes. Enfin, les systèmes obtenus sont métastables d'un point de vue thermodynamique et tendent à se ré-agréger dans le temps.

La deuxième méthode conduit à la formation de groupements fonctionnels à la surface des nanotubes et à leurs extrémités, d'où une dénaturation qui, là encore, ne permet pas de tirer tout le profit des exceptionnelles propriétés mécaniques, électriques et optiques des nanotubes.

Le document WO 02/088025 propose une méthode de dispersion de nanotubes de carbone dans un solvant polaire organique consistant à prétraiter lesdits nanotubes par une amine organique.

Les travaux des inventeurs ont porté sur la recherche d'un procédé permettant de dissoudre les nanotubes, sans utiliser de tensio-actifs ou de polymères dispersants et des ultrasons, et sans traitements acides. Il s'est ainsi avéré que ces buts pouvaient être atteints par réduction, par exemple chimique ou électrochimique, des échantillons de nanotubes.

L'invention a donc pour but de fournir un procédé de dissolution de nanotubes permettant de préserver leur intégrité et, par là, leurs propriétés.

Le procédé, selon l'invention, de dissolution de nanotubes de carbone est caractérisé en ce qu'il comprend la réduction de nanotubes, ce qui conduit à des nanotubes chargés négativement avec des contre-ions positifs; et la dissolution du sel de nanotubes ainsi obtenu dans un solvant polaire organique.

Dans une disposition préférée, les contre-ions sont des cations d'éléments alcalins.

L'invention vise notamment un procédé de dissolution de nanotubes de carbone caractérisé en ce qu'il comprend l'addition, dans des conditions anaérobies, aux nanotubes, d'un sel de formule :

A⁺B⁻

dans laquelle
- A⁺ représente un cation d'un ion alcalin, tel que le lithium ou le sodium et
- B⁻, un anion d'un composé polyaromatique,
de manière à charger électriquement les nanotubes, l'anion du composé polyaromatique étant un réducteur pour ces nanotubes.

Le sel de nanotube est séparé du milieu par filtration et séché. Dans une deuxième étape, on ajoute un solvant polaire, ce qui conduit à une phase avec les nanotubes dissous et à une phase non dissoute. On sépare alors les solutions de nanotubes, par exemple, par centrifugation du résidu solide.

On notera que cette mise en solution, qui multiplie, comme souligné plus haut, les possibilités technologiques de préparation de dispositifs de nanotubes de carbone, n'amène aucune dénaturation des nanotubes.

En particulier, on observera qu'il suffit de mettre moins de nanotubes dans une matrice pour obtenir des propriétés équivalentes ou supérieures (par ex. dans des films transparents) à celles obtenues avec les techniques actuelles, la longueur des nanotubes ayant été préservée.

De manière avantageuse, le composé polyaromatique est choisi parmi le naphtalène, la benzophénone, la fluorénone et l'anthraquinone.

Des solvants organiques polaires appropriés pour la mise en oeuvre de l'invention comprennent le sulfolane, le diméthylsulfoxyde, le diméthylformamide, la N-méthylpyrrolidone, ou du N-méthyl formamide.

Selon une disposition de l'invention, les nanotubes contiennent du bore en substitution de carbone.

Dans un mode de réalisation de l'invention, les nanotubes mis en oeuvre sont monoparois.

Dans un autre mode de réalisation, les nanotubes sont multiparois.

Selon les applications envisagées, les nanotubes mis en oeuvre sont vides, ou bien renferment des molécules, par exemple, photosensibles ou des fullerènes, des sels tels que des halogénures d'alcalins, ou encore des éléments métalliques.

Le procédé de dissolution de nanotubes de carbone peut comprendre en outre, selon l'invention, une étape de purification des nanotubes.

Il peut également comprendre une étape de fonctionnalisation de la surface ou des extrémités des nanotubes.

De manière avantageuse, les solutions obtenues selon l'invention sont utilisées pour imprégner des polymères, pour fabriquer des plastiques antistatiques ou du renfort mécanique, ou pour le blindage électromagnétique, ou encore sont déposées sur des supports pour former des films minces, éventuellement orientés, à propriétés électro-optiques.

A partir de ces solutions, il est possible de purifier les nanotubes (par exemple par cristallisation/précipitation, chromatographie, électrophorèse,...), d'obtenir des mésophases (cristal liquide) de nanotubes, des buckypapers et de manière générale d'effectuer des mises en forme conduisant à tout type de dispositif mettant à profit les propriétés mécaniques, électriques, optiques de grand intérêt des nanotubes de carbone.

En particulier, ces solutions donnent accès à des revêtements transparents et conducteurs, soit par mélange avec un polymère soluble dans des solvants organiques, soit par mélange avec un monomère et polymérisation subséquente.

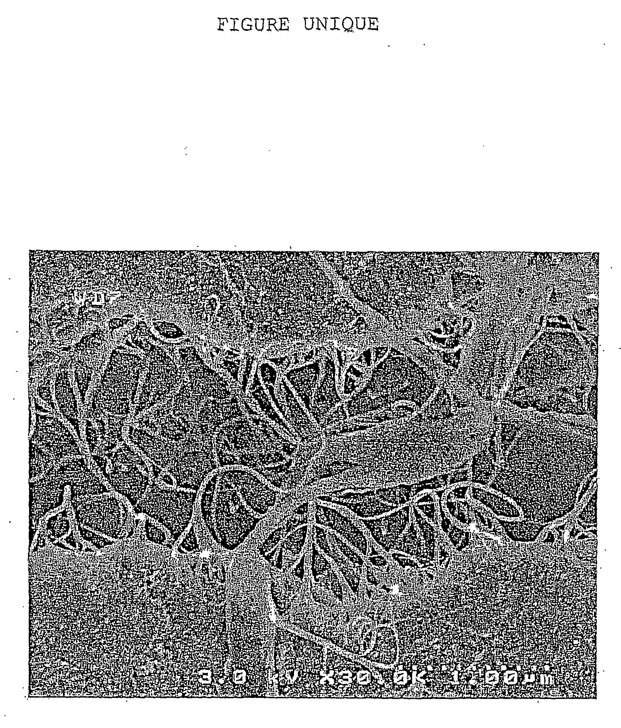

D'autres caractéristiques et avantages de l'invention sont donnés dans les exemples qui suivent et en se référant à la figure unique, qui représente une image d'un extrait sec obtenu à partir d'une solution de nanotubes de carbone dans DMSO, prise par microscopie électronique à balayage.

### Exemple 1 : synthèse d'un sel de lithium de nanotubes de carbone.

On opère sous atmosphère contrôlée (par exemple sous argon). Ce sel est obtenu par réaction d'une suspension de nanotubes de carbone dans du THF dans lequel est dissous un sel de naphtalène, Naph⁻Li⁺(Naph = Naphtalène) en opérant selon un procédé modifié par rapport à P. Petit et al, Chemical Physics Letters, 1999, 305, 370-374 et E. Jouguelet et al, Chemical Physics Letters, 2000, 318, 561-564.

En particulier, le sel Naph⁻Li⁺ a été préparé par réaction du naphtalène avec un excès de lithium dans le THF jusqu'à développement d'une couleur vert très sombre, proche du noir.

Cette solution de Naph⁻Li⁺ a été ensuite ajoutée à des nanotubes de carbone bruts obtenus par la méthode de l'arc électrique et laissée sous agitation pendant quelques heures. Les nanotubes ont alors été filtrés et rincés au THF jusqu'à la disparition de toute coloration de ce dernier au contact des nanotubes. On procède ensuite à un séchage sous vide à température ambiante.

A titre illustratif, on rapporte l'exemple de synthèse effectué à l'échelle du laboratoire : toutes les manipulations sont effectuées en boîte à gants sous atmosphère d'argon sec, (teneur en 02 < 5 ppm, teneur en H₂O < 1 ppm).

320 milligrammes de naphtalène sont placés dans un ballon de 250 cc auquel on rajoute 30 milligrammes de lithium en petits morceaux de surface brillante (épluchés au scalpel juste avant utilisation), puis de l'ordre de 100 cc de THF. Le ballon est chauffé au reflux jusqu'à ce que la solution prenne une couleur vert très sombre et laissé au reflux quelques heures. Cette solution est ensuite versée en filtrant, pour éviter un excès de lithium solide, sur 180 milligrammes de nanotubes bruts (synthétisés à l'arc électrique). Le tout est laissé sous agitation à température ambiante pendant quatre heures. Alternativement, on peut suivre la diminution de la concentration en Naph⁻Li⁺ par spectroscopie UV visible. On filtre, cette solution sur membrane de type Millipore® (0.45 microns de porosité). Le solide est rincé plusieurs fois avec du THF (distillé sur un mélange lithium/naphtalène), jusqu'à l'obtention de THF reste incolore après passage à travers le filtre. On procède ensuite au séchage sous vide à température ambiante. Le solide présente une bonne stabilité au stockage d'au moins plusieurs mois, sous atmosphère contrôlée.

Dans une autre expérience, on opère comme indiqué ci-dessus, mais on utilise 390 mg de naphtalène, 120 mg de sodium métallique, 220 mg de nanotubes bruts, puis on soumet à agitation pendant 15 h environ.

Préparation des solutions : Différents solvants organiques polaires (sulfolane, diméthylsulfoxyde, diméthylformamide, N-méthylpyrrolidinone,...) sont ajoutés aux nanotubes dopés. En quelques minutes à quelques heures, on obtient une solution plus ou moins sombre suivant la solubilité des nanotubes dans le solvant.

Régénération de caractère neutre des nanotubes : Afin que les nanotubes puissent être facilement manipulables à l'air libre pour les applications qui ne nécessitent pas de nanotubes électriquement chargés, on restaure leur état neutre soit en exposant la solution à l'air, soit, pour accélérer le processus, par addition d'eau ou de toluène.

Dans tous ces cas, les nanotubes se ré-agrègent et il suffit alors de filtrer la solution pour récupérer la fraction insoluble.

Exemple de solubilisation :40mg de nanotubes dopés par du sodium sont soumis à agitation pendant environ 14h dans 16 cc de DMSO, sous atmosphère contrôlée à température ambiante. La solution obtenue est centrifugée à 4000 t/min, pendant 1h, puis décantée. On obtient une solution homogène de nanotubes, c'est-à-dire ne comprenant pas d'agrégats visibles au microscope optique (grossissement = 1000). On obtient une solubilité de 2 mg de nanotubes dopés au sodium par gramme de DMSO.

Exemple de fonctionnalisation : On fixe un groupement organique R sur un nanotube en procédant selon la réaction :

(Li⁺)ₓ NT^{x-} +x(R-Br)→ NT(R)ₓ+ xLiBr

où NT désigne un nanotube, et x un nombre entier correspondant à la stoechiométrie.

## Revendications

1. Procédé de dissolution de nanotubes de carbone, **caractérisé en ce qu'**il comprend :
la réduction de nanotubes, ce qui conduit à des nanotubes chargés négativement avec des contre-ions positifs ; et
la dissolution du sel de nanotubes ainsi obtenu dans un solvant polaire organique.

2. Procédé selon la revendication 1, **caractérisé en ce que** les contre-ions sont des cations d'éléments alcalins.

3. Procédé selon la revendication 1 ou 2, **caractérisé en ce qu'**il comprend l'addition, dans des conditions anaérobies, aux nanotubes, d'un sel de formule :
A⁺B⁻
dans laquelle :
A⁺ représente un cation. d'un ion alcalin, tel que le lithium ou le sodium, et
B⁻, un anion d'un composé polyaromatique,
de manière à charger électriquement les nanotubes.

4. Procédé selon la revendication 3, **caractérisé en ce que** le composé aromatique est choisi parmi le naphtalène, la benzophénone, la fluorénone et l'anthraquinone.

5. Procédé selon l'une quelconque des revendications 1 à 4, **caractérisé en ce que** le solvant polaire organique est choisi parmi le sulfolane, le diméthylsulfoxyde, le diméthylformamide, la N-méthylpyrrolidone, ou le N-méthyl formamide.

6. Procédé selon l'une quelconque des revendications précédentes, **caractérisé en ce que** les nanotubes contiennent du bore en substitution de carbone.

7. Procédé selon l'une quelconque des revendications précédentes, **caractérisé en ce que** les nanotubes mis en oeuvre sont monoparois.

8. Procédé selon l'une quelconque des revendications 1 à 6, **caractérisé en ce que** les nanotubes mis en oeuvre sont multiparois.

9. Procédé selon la revendication 7 ou 8, **caractérisé en ce que** les nanotubes mis en oeuvre sont vides.

10. Procédé selon la revendication 7 ou 8, **caractérisé en ce que** les nanotubes mis en oeuvre renferment des molécules, par exemple, photosensibles ou des fullerènes, des sels tels que des halogénures d'alcalins, ou encore des éléments métalliques.

11. Procédé selon l'une quelconque des revendications précédentes, **caractérisé en ce qu'**il comprend en outre une étape de purification des nanotubes.

12. Procédé selon l'une quelconque des revendications précédentes, **caractérisé en ce qu'**il comprend en outre une étape de fonctionnalisation de la surface ou des extrémités des nanotubes.

13. Application du procédé selon l'une quelconque des revendications précédentes à la préparation de composites à propriétés améliorées ou de films minces orientés ou non de nanotubes de carbone, ou de films composites.

14. Applications selon la revendication 13, comme renforts mécaniques, matériaux antistatiques, pour le blindage électromagnétique.

15. Application selon la revendication 13, comme revêtements transparents et électriquement conducteurs.

## Patentansprüche

1. Verfahren zum Lösen von Kohlenstoffnanoröhren, **dadurch gekennzeichnet, dass** man:
Nanoröhren reduziert, was zu negativ geladenen Nanoröhren mit positiven Gegenionen führt; und
das so erhaltene Nanoröhrensalz in einem polaren organischen Lösungsmittel löst.

2. Verfahren nach Anspruch 1, **dadurch gekennzeichnet, dass** es sich bei den Gegenionen um Alkalielementkationen handelt.

3. Verfahren nach Anspruch 1 oder 2, **dadurch gekennzeichnet, dass** man unter anaeroben Bedingungen ein Salz der Formel:
A⁺B⁻
worin:
A⁺ für ein Kation eines Alkaliions, wie Lithium oder Natrium, steht und
B⁻ für ein Anion einer polyaromatischen Verbindung steht,
zu den Nanoröhren gibt, um die Nanoröhren elektrisch zu laden.

4. Verfahren nach Anspruch 3, **dadurch gekennzeichnet, dass** die aromatische Verbindung aus Naphthalin, Benzophenon, Fluorenon und Anthrachinon ausgewählt wird.

5. Verfahren nach einem der Ansprüche 1 bis 4, **dadurch gekennzeichnet, dass** das polare organische Lösungsmittel aus Sulfolan, Dimethylsulfoxid, Dimethylformamid, N-Methylpyrrolidon und N-Methylformamid ausgewählt wird.

6. Verfahren nach einem der vorhergehenden Ansprüche, **dadurch gekennzeichnet, dass** die Nanoröhren Bor als Ersatz für Kohlenstoff enthalten.

7. Verfahren nach einem der vorhergehenden Ansprüche, **dadurch gekennzeichnet, dass** die verwendeten Nanoröhren einwandig sind.

8. Verfahren nach einem der Ansprüche 1 bis 6, **dadurch gekennzeichnet, dass** die verwendeten Nanoröhren mehrwandig sind.

9. Verfahren nach Anspruch 7 oder 8, **dadurch gekennzeichnet, dass** die verwendeten Nanoröhren leer sind.

10. Verfahren nach Anspruch 7 oder 8, **dadurch gekennzeichnet, dass** die verwendeten Nanoröhren Moleküle, beispielsweise lichtempfindliche Moleküle oder Fullerene, Salze wie Alkalihalogenide oder auch Metallelemente, enthalten.

11. Verfahren nach einem der vorhergehenden Ansprüche, **dadurch gekennzeichnet, dass** es außerdem einen Schritt der Reinigung der Nanoröhren umfasst.

12. Verfahren nach einem der vorhergehenden Ansprüche, **dadurch gekennzeichnet, dass** es außerdem einen Schritt der Funktionalisierung der Oberfläche oder der Enden der Nanoröhren umfasst.

13. Anwendung des Verfahrens nach einem der vorhergehenden Ansprüche zur Herstellung von Verbundwerkstoffen mit verbesserten Eigenschaften oder gegebenenfalls orientierten dünnen Filmen von Kohlenstoffnanoröhren oder Verbundfolien.

14. Anwendungen nach Anspruch 13 als mechanische Verstärkungen, antistatische Materialien oder zur elektromagnetischen Abschirmung.

15. Anwendung nach Anspruch 13 als transparente und elektrisch leitfähige Beschichtungen.

## Claims

1. A method of dissolving carbon nanotubes, **characterized in that** it comprises:
the reduction of nanotubes, which results in negatively charged nanotubes with positive counterions; and
the dissolution of the resulting nanotube salts in a polar organic solvent.

2. Method as claimed in claim 1, **characterized in that** the counterions are alkali metal cations.

3. Method as claimed in claim 1 or 2, **characterized in that** it includes the addition to the nanotubes, under anaerobic conditions, of a salt of formula:
A+B-
wherein:
A+ represents a cation of an alkali metal ion, such as lithium or sodium; and
B- represents an anion of a polyaromatic compound;
so as to electrically charge the nanotubes.

4. Method as claimed in claim 3, **characterized in that** the aromatic compound is selected from naphthalene, benzophenone, fluorenone or anthraquinone.

5. Method as claimed in any one of claims 1 to 4, **characterized in that** the polar organic solvent is selected from sulfolane, dimethyl sulfoxide, dimethylformamide, N-methylpyrrolidone or N-methylformamide.

6. Method as claimed in any one of the preceding claims, **characterized in that** the nanotubes contain boron as a substitute for carbon.

7. Method as claimed in any one of the preceding claims, **characterized in that** the nanotubes used are single-walled nanotubes.

8. Method as claimed in any one of claims 1 to 6, **characterized in that** the nanotubes used are multi-walled nanotubes.

9. Method as claimed in claim 7 or 8, **characterized in that** the nanotubes used are empty nanotubes.

10. Method as claimed in claim 7 or 8, **characterized in that** the nanotubes used contain molecules, for example photosensitive molecules or fullerenes, salts, such as alkali metal halides, or else metal elements.

11. Method as claimed in any one of the preceding claims, **characterized in that** it further comprises a step of purifying the nanotubes.

12. Method as claimed in any one of the preceding claims, **characterized in that** it further comprises a step of functionalizing the surface or the ends of the nanotubes.

13. Use of the method as claimed in any one of the preceding claims for the preparation of composites having improved properties or of oriented or unoriented thin films of carbon nanotubes, or of composite films.

14. Use as claimed in claim 13, as mechanical reinforcements, antistatic materials or materials for electromagnetic shielding.

15. Use as claimed in claim 13, as electrically conducting transparent coatings.
